# EUROPEAN PATENT SPECIFICATION

(11) **EP 4 295 682 B1**
(45) Date of publication and mention of the grant of the patent: **25.12.2024**
(21) Application number: 22714225.4
(22) Date of filing: 15.02.2022
(51) Int. Cl.: A01N 1/02

(54) **MODULAR AND VERSATILE PERFUSION DEVICE FOR PRESERVING AN ORGAN UNDER ADJUSTABLE OPERATING CONDITIONS**
MODULARE UND VIELSEITIGE PERFUSIONSVORRICHTUNG ZUR KONSERVIERUNG EINES ORGANS UNTER EINSTELLBAREN BETRIEBSBEDINGUNGEN
DISPOSITIF DE PERFUSION MODULAIRE ET POLYVALENT POUR CONSERVER UN ORGANE DANS DES CONDITIONS DE FONCTIONNEMENT RÉGULABLES

(30) Priority: 16.02.2021 ES 202130120
(43) Date of publication of application: 27.12.2023
(73) Proprietor: Ebers Medical Technology, S.L, 50016 Zaragoza (ES)
(72) Inventor: MOREO CALVO, Pedro, 50016 Zaragoza (ES); ALASTRUÉ VERA, Víctor, 50016 Zaragoza (ES); CONTE BLASCO, Javier, 50016 Zaragoza (ES); MAINAR LÓPEZ, Marta, 50016 Zaragoza (ES); BERGES LASHAYAS, Iván Jesús, 50016 Zaragoza (ES); ALASTRUEY LÓPEZ, Diego, 50016 Zaragoza (ES); ARROYO VALLE, Francisco José, 50016 Zaragoza (ES)
(74) Representative: Pons
(86) International application number: PCT/ES2022/070075
(87) International publication number: WO 2022/175575

(56) References cited:
- WO-A1-2016/090498
- DE-A1- 102016 117 901
- US-A- 6 046 046
- US-A1- 2010 092 939

## Description

### OBJECT OF THE INVENTION

The present invention falls within the technical field of perfusion devices for an organ. More particularly, the object of the present invention is a versatile device that can preserve different types of organs in one same device, under different operating conditions, such as normothermia, sub-normothermia and hypothermia, and that the arrangement, type and number of elements of the primary perfusate circuit can be modified as required.

### BACKGROUND OF THE INVENTION

Transplants are the best technique available for treating terminal failure of most essential organs, with more than 1 million patients worldwide having benefited from an organ transplant in the past. However, organ transplants are being conditioned by multiple limitations. The most important of these is the lack of enough organs to cover transplant needs. Official estimates from the World Health Organization establish that with the current number of transplants, only 10% of global needs are being covered. In addition, the preservation times for organs outside the body are short, which complicates inpatient and outpatient hospital logistics, requires the medical team to perform for a large number of extra hours and leads to an inefficient use of operating rooms. Moreover, organs are often transplanted without objective information on the viability and function of the organ, which sometimes results in non-viable organs or organs with very poor function being transplanted or, on the contrary, potentially viable organs being discarded.

All of these problems are related to the most common method of preserving the organ outside the body from the time it is extracted from the donor to the transplant thereof in the recipient: static cold storage (SCS). SCS involves washing the organ and preserving it in a preservation solution that is kept at ~4°C by using an ice cooler. This low temperature slows down the metabolism of the organ and enables preserving, for example, the kidney up to ~24 hours or the liver up to ~10 hours.

Although it is a simple and inexpensive method, due to many reasons SCS is considered to be the main limiting factor for the progress of the transplant. Firstly, SCS does not allow preservation times to be extended beyond the values currently reached without negatively affecting the post-transplant results. Secondly, SCS induces certain damage to the organ that is a direct function of preservation time and one of the causes of long-term deterioration of the transplanted organ, even if it initially recovers the function thereof after the transplant. Moreover, SCS maintains the organ under conditions far removed from physiological conditions, which notably alters the metabolic and secretory activity of the organ and prevents an objective assessment of the viability and function of the organ before it is transplanted. Finally, the growing global demand for organs can only be met by transplanting poorer quality organs, usually referred to as marginal or suboptimal organs, from donors with expanded criteria, which have traditionally been discarded due to the advanced age thereof, the conditions of the death and the recovery of the organ, the presence of certain previous pathologies that affect the quality of the organ, etc. In general, suboptimal organs tolerate SCS very poorly.

Having known these limitations of SCS for decades, alternative preservation methods have been developed with the aim of overcoming the problems of SCS. The vast majority of alternative preservation methods are based on the perfusion of the organ with a preservation solution, which requires the use of perfusion machines. These perfusion-based methods can be grouped into two large families.

Hypothermic perfusion: this method improves cold preservation conditions by applying a flow of preservation solution through the vascular network of the organ under hypothermic conditions. Due to said flow, said solution is distributed more quickly and homogeneously in the volume of the organ, reducing cellular metabolism more efficiently. In addition, hypothermic perfusion machines enable measuring some parameters related to the organ's state of preservation (such as fluidic resistance), which serve as an indication of the quality of the preserved organ. Occasionally, the perfusate is oxygenated by including an oxygenator in the perfusion circuit, which has beneficial effects on the preserved organ.

Normothermic perfusion: it entails a radical innovation compared to SCS or hypothermic perfusion, since it is not based on lowering cellular metabolism due to low temperature, but rather maintaining normal metabolic activity of the organ throughout the preservation process in order to avoid all the drawbacks associated with the effects of cold ischaemia. For this, it is essential to reproduce a preservation environment -temperature, nutrients, oxygenation, haemodynamic conditions, chemical signals-as similar as possible to the physiological environment that the organ experiences *in vivo.* This is achieved by perfusing the organ with a perfusate that is maintained under physiological temperature conditions and that also provides nutrients and oxygen to the organ. In these quasi-physiological conditions, the metabolic and secretory activity of the preserved organ is hardly altered. This method improves the state of the organ after preservation by avoiding the ischaemia-reperfusion damage inherent to hypothermia techniques. For this same reason, preservation in normothermia is compatible with suboptimal organs, which enables the donor pool to be greatly increased. In addition, by keeping the organ in a fully functional state, the preservation period can be prolonged and the viability and metabolic function of the organ can be assessed in real time, providing the medical team with relevant information about the organ's state of preservation. This possibility is especially useful when dealing with organs that are suboptimal or of questionable validity.

Known existing models have focused on liver and kidney preservation and, to a lesser extent, lung and heart preservation. They have also been used in a more testimonial manner in other organs such as the uterus or pancreas.

However, the perfusion machine models developed to date share a common feature and that is that they are closed, barely modular systems in which it is very complicated for the user to introduce modifications to the configuration of the equipment. This restricts the use of each machine to a series of specific applications (e.g., a specific organ, or a specific preservation strategy). However, there is a need for universal preservation platforms, which offer great versatility to the non-technical user to modify the configuration of the equipment, so that one same machine can be used, for example, across a very wide range of applications, with different organs or for testing a wide variety of preservation conditions or therapies.

US 6 046 046 A discloses an organ perfusion device comprising the features of the preamble of claim 1. DE 10 2016 117901 A1 addresses the problem of adapting a single organ perfusion device to different types of organs, e.g. by providing organ-specific additional modules to a universal basic system. These additional modules are removable elements that may be attached to the basic system at a predetermined location by fixing means.

### DESCRIPTION OF THE INVENTION

The present invention seeks to solve some of the problems mentioned in the state of the art. More specifically, the present invention describes a modular and versatile perfusion device for preserving an organ under adjustable operating conditions, comprising:
a support comprising an upper tray that houses a chamber that in turn houses the organ, said chamber in turn comprises at least one hydraulic inlet and outlet that connect in fluid communication with a primary circuit through which a perfusate fluid circulates, wherein said primary circuit is connected to the vascular network of the organ, thus forming a closed circuit such that the perfusate fluid passes through the organ and is recirculated by means of at least one pumping element, wherein the device further comprises a plurality of removable elements connected to the primary circuit arranged in a central portion of the support, wherein each removable element is connected to the central portion of the support by means of an anchoring plate moveable along at least one connection guide of the support and fixed thereto by means of at least one fixing element, thus enabling each connectable element to be placed as required in a desired position along the connection guide, modifying the primary circuit depending on the organ to be preserved.

The present invention is intended for preserving, assessing viability and function, transporting and applying treatments on solid organs. By way of example, without being an exhaustive list, the device described above enables a kidney, liver, lung, heart, pancreas, uterus or completely or partially amputated limbs, among other organs, to be preserved.

The variability of the position and the typology of the removable elements that can be, for example, sensors operatively connected to a control unit, enable adaptation not only to different organs but also to different operating conditions such as normothermia, sub-normothermia and hypothermia.

More particularly, the removable elements comprise one or more sensors of:
- flow;
- pressure;
- oxygen saturation;
- haematocrit;
- haemoglobin;
- temperature.

The primary circuit is a closed circuit through which the perfusate fluid circulates, which is directly connected to the preserved organ. In its most basic version, the perfusate circuit consists only of tubes and some cannulation system (catheter, cannula, connectors, etc.) for the connection thereof to the vascular network of the organ. Depending on the chosen preservation strategy, the primary perfusate circuit may include other elements such as filters, reservoirs, oxygenators, dialysers, wet parts of pumping systems or sensors, among others. Any of the aforementioned elements can be a removable element and consequently be connected to an anchoring plate to be moved or replaced as required along the guides of the support.

In a preferred embodiment, the connection guide of the central portion of the support is a slot through which a rail of the anchoring plate penetrates.

The fixing element can be a screw or a cam that passes through the slots and fixes the anchoring plate to the support in the desired position of the slot.

Depending on the size of the removable element, it can be fixed by means of one or more anchoring plates. Anchoring plates of standard design can be used, such as those intended for supporting elements with a circular cross-section, available in various sizes. For fastening elements with complex or non-standard geometries, intermediate flanges can be manufactured using rapid prototyping, specific to the geometry of the element in question, which in turn are mounted on the anchoring plate.

Preferably, the support comprises a plurality of slots for coupling a plurality of anchoring plates attached to different sensors that are operatively connected to a control unit, wherein the sensors are strategically placed in different positions of the primary circuit depending on the type of organ and/or desired operative conditions.

In addition, each pumping element is connected to a moveable anchoring plate through a pumping guide arranged in the central portion of the support, thus enabling each pumping element to be placed as required in a desired position of the primary circuit along said pumping guide.

The pumping guides can also be slots adapted to fit into the rails of the anchoring plates.

The chamber where the organ is housed can be removable and coupled to an upper tray of the support.

As a consequence, both the number, type, model and position of the removable elements (sensors, actuators, auxiliary elements) as well as the chamber itself in which the organ is housed, is configurable by the user, which enables the platform to be used to preserve different types of organs, in highly variable conditions and in very different applications.

The main function of the aforementioned upper tray is to support and fix the chamber that contains the preserved organ, and in a preferred embodiment it is located at a suitable height so that a user standing next to the platform can handle the organ located in the chamber in an ergonomic posture, such as introducing or removing the organ, cannulation, etc.

In a possible embodiment of the system, the tray has a support part for supporting the chamber, the geometry of which corresponds to that of the chamber in which the organ is housed. The function of this support is to fix the organ chamber to the upper tray. To ensure system compatibility with various chamber models, this support can have several different geometries engraved therein so that it can be used to fix different chamber models to the system. In addition, if necessary, the support can be replaced without modifying the rest of the elements of the upper tray, which enables the compatibility of the system to be extended to other additional chamber models.

There may be multiple types of chambers, depending on the organ preserved and the requirements derived from the chosen preservation strategy. The chamber can be open or have one or more covers to close it and protect the housed organ.

Preferably, one or more connection guides are connection slots arranged at different heights in a substantially horizontal plane and one or more pumping slots are arranged in a vertical plane in the central portion of the support to one side or adjacent to the connection slots.

In a preferred embodiment, the primary circuit further comprises a plurality of modular tubes connected to each other through which the perfusate fluid circulates, thus enabling the hydraulic configuration of the primary circuit to be changed by means of hydraulic forks or bends arranged between each tube.

In a possible embodiment of the device, the central panel of the support is made of a material and with a thickness such that it offers sufficient rigidity for the correct fastening and mounting of the elements of the primary perfusate circuit and of the pumping elements, as well as being resistant to cleaning by means of cleaning and disinfecting chemicals commonly available in hospital environments. A possible suitable material for this application are phenolic resins.

Some of the elements that are mounted on the central panel may require electrical connection with the control electronics of the platform. In such a case, the mounting of the element will preferably be carried out such that the cable or set of cables exits the element in a rearward direction, in any case passing through the panel through the slots.

In addition, the support can be provided with one or more side panels at each end of the central panel, wherein each side panel comprises one or more auxiliary elements and/or secondary circuits that are connected to the primary circuit via fluidic, pneumatic and/or electrical means.

This side panel or panels are intended to house and support secondary or auxiliary elements or circuits of the system, consisting of devices that are not directly inserted in the primary circuit.

Secondary circuits can contain and transport secondary fluids, which are normally supplied to the primary perfusate circuit or directly to the organ. By way of example, they may consist of a syringe and a connection tube for connecting to the primary circuit, a reservoir in the form of a flexible bag and a connection tube for connecting to the primary circuit, a closed circuit for dialysis fluid and dialysis filter, etc.

Depending on the chosen preservation strategy, these secondary circuits may contain other elements such as filters, reservoirs, oxygenators, wet parts of pumping systems or sensors, among others. The secondary elements mounted on the side panels, like the removable elements of the primary circuit, can be connected or communicated with the control unit.

Thus, one of the advantages of the present invention is the versatility of the perfusion device, which enables the user to easily use the same device for preserving different types of organs, under different preservation conditions, with different configurations of the perfusion circuit and with different control algorithms. The algorithms can be modified in the control unit depending on the type of organ and the desired configuration of the primary circuit with the type, number and arrangement of removable elements connected therein, as well as the pumping elements and the hydraulic configuration (number of tubes, bends, forks, etc.). The algorithms can also depend on the auxiliary or secondary elements of the secondary circuit.

By way of example, the secondary or auxiliary elements can be a gas mixer for supplying gases to an oxygenator mounted in the primary circuit, a heated/cooled water circuit (for regulating the perfusate temperature by means of heat exchange in an oxygenator or a gas exchanger located in the primary circuit), syringe pumps (for supplying accessory fluids to the primary circuit), a medium replenishment system (for supplying culture medium in order to compensate for losses of the primary circuit and thus be able to keep the volume of perfusate constant), an electrical stimulation system (for applying electrical stimuli to certain organs such as the heart), a mechanical ventilation system for forced ventilation of certain organs such as the lung, a dialysis system for removing waste products from the primary perfusate circuit, a cell culture system that enables cells or cell by-products to be maintained or cultured, such as, for example, exosomes or vesicles, which will subsequently be supplied to the organ or to the perfusate or a system for deforming the preserved organ (for reproducing in the system the mechanical pressures to which the organ is subjected in the body). These secondary systems are characterised in that, in general, they are independent modules.

In a possible embodiment, the support is provided with two side panels located on both sides of the central panel, wherein said two side panels are arranged in an oblique position with respect to the central panel oriented towards the central panel, such that the fluidic connection between the secondary elements and the primary perfusate circuit is simple and, at the same time, a user located in front of the equipment has a direct line of sight on the side panels.

The spatial arrangement of the removable elements, as well as of the pumping elements and the secondary circuit, is such that it enables significant flexibility and modularity, giving rise to configurations of the primary perfusion circuit that are simple to mount and do not cause problems in the operation of said perfusion circuit.

In a preferred embodiment, this is achieved by grouping the position of the pumping elements into two columns by means of anchoring plates that move through vertical slots and are fixed to the central portion of the support by attachment elements such as screws or locking cams. The rest of the removable elements of the primary circuit are also fixed on the central portion by means of anchoring plates and horizontal slots, concentrating the auxiliary elements and secondary circuits in two side panels and the chamber for housing the organ in an upper portion of the support.

The device may be equipped with a user interface made up of different hardware elements that enable the user to communicate with the platform.

In a possible embodiment of the device, the user interface comprises, among others, an orientable touch screen mounted on a mast and located in a suitable position so that a user standing in front of the equipment can view, in an ergonomic posture, the content of the screen and touch it with one of their hands. This primary interface is intended for the main user of the equipment, it enables the normal operation of the equipment to be programmed and, among other data, it shows the values measured by the equipment sensors in a numerical or graphical manner.

In a possible embodiment, the device comprises a second user interface for engineering and maintenance tasks, formed by, among other elements, a touch screen housed inside a rear cabinet.

In a possible embodiment, the device has at least one connection port to which it is possible to connect a computer or a mobile phone with its own user interface independent of the primary one.

In a possible embodiment of the equipment, the foregoing connection between the platform and the computer is made wirelessly.

In a possible embodiment of the device, there is a cabinet behind each side panel. In this embodiment, the secondary elements that are mounted on the side panel and that do not need to be accessible to the user will be arranged in this rear cabinet and only those secondary elements with which the user has to interact will be mounted on the side panel, on the front surface directly accessible to the user. By way of example, all the elements of a gas mixing system (boilers, solenoid valves, sensors, air pumps, control electronics of the module, etc.) would be housed in one of these boxes and, on the surface of the side panel, the user would only have access to a pneumatic connector through which the premixed gas would be supplied under the appropriate conditions, which would be led to the oxygenator of the primary perfusate circuit through a tube.

In a possible embodiment of the device, the covers of the rear cabinets are mounted on hinges and fixed in the closed position by means of a cam, crank or screws. In this way, when mounting, dismounting or accessing the elements of a secondary system, the user can easily release the cover, open it and thus gain access to the rear cabinet of the side panel.

In a preferred embodiment of the present invention, the rear cabinets are located in the rear area of the support, behind the central panel where the primary circuit is fixed. The main function thereof would be to house the control and power electronics of the equipment. They have removable covers to be able to carry out mounting and maintenance tasks, as well as cable grommets, to enable the wiring to pass between the different cabinets, as well as between the cabinets and the rest of the sensors, actuators and secondary elements.

In a possible embodiment of the perfusion device, there are three independent cabinets, intended to house the supply electronics, the control electronics and the power electronics, respectively. The cabinet of the supply electronics contains elements such as a source of supply, an electrical energy storage system (e.g., batteries), a charge control system of the storage system and protection and on/off elements, among others. The cabinet of the control electronics contains electronic components for measuring the signal of the system sensors, for controlling the different interface elements (e.g., screens or keyboards) and for programming the different control algorithms of the platform. Some of these electronic components may be mounted on one or more printed circuit boards. The cabinet of the power electronics contains electronic components for actuating the different actuators of the system. Some of these electronic components may be mounted on one or more printed circuit boards. This partitioning has the advantage of separating electronic components with different functions into isolated areas, which reduces electromagnetic noise.

In a possible embodiment of the equipment, the enclosures of the cabinets are made of metal material, which makes it possible to increase the electromagnetic insulation of the components located therein and reduce problems derived from emissions or electromagnetic noise.

In an embodiment of the device, several of the electronic components of the cabinets can be mounted on detachable trays or supports, which can be slid out of the cabinet to perform mounting or maintenance tasks.

### DESCRIPTION OF THE DRAWINGS

As a complement to the description provided and for the purpose of helping to make the features of the invention more readily understandable, in accordance with a practical preferred exemplary embodiment thereof, said description is accompanied by a set of drawings which, by way of illustration and not limitation, represent the following:
Figure 1 shows a front perspective view of the support according to a preferred embodiment of the present invention, wherein the horizontal slots, the vertical slots, the chamber to house the organ and the side panels can be seen.
Figure 2 shows a front perspective view of a preferred embodiment of the present invention, wherein the primary circuit, the pumping elements and the secondary elements are illustrated with a configuration suitable for normothermic perfusion of a kidney with perfusate dialysis.
Figure 3 shows a front perspective view of a preferred embodiment of the present invention, wherein the primary circuit, the pumping elements and the secondary elements are illustrated with a configuration suitable for normothermic perfusion of a liver.
Figure 4 shows a perspective view according to a preferred embodiment of the present invention of a pumping element mounted on an anchoring plate configured for sliding and being fixed by the vertical slots of the support.
Figure 5 shows a side perspective view of the perfusion device, wherein a rear cabinet can be seen mounted behind the side panel, wherein actuation elements for actuating syringe pumps are fixed.

### PREFERRED EMBODIMENT OF THE INVENTION

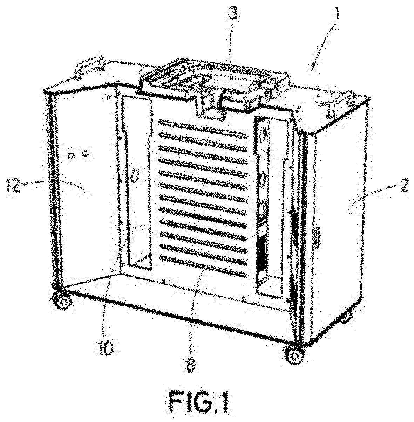

Next, with the help of the attached figures 1-5 described above, a detailed description of several preferred exemplary embodiments of the object of the invention is provided.

As illustrated in Figures 1-3, the object of the invention relates to a modular and versatile perfusion device (1) for preserving an organ under adjustable operating conditions, comprising a support (2) comprising a chamber (3) that houses the organ, said chamber (3) in turn comprises at least one hydraulic inlet and outlet that connect in fluid communication with a primary circuit (4) through which a perfusate fluid circulates, wherein said primary circuit (4) is connected to the vascular network of the organ, thus forming a closed circuit such that the perfusate fluid passes through the organ and is recirculated by means of at least one pumping element (5).

The device comprises a plurality of removable elements (6) connected to the primary circuit (4), wherein each removable element (6) is connected to a central portion (9) of the support (2) by means of an anchoring plate (7) moveable along a connection guide (8) of the support (2) and is fixed thereto by means of a fixing element, thus enabling each removable element (6) to be placed as required in a desired position along the connection guide (8) modifying the primary circuit (4) depending on the organ to be preserved.

In a preferred embodiment, described in Figures 1-3, the device comprises a plurality of connection guides (8) which are, in the embodiments illustrated therein, horizontal slots for coupling a plurality of anchoring plates (7) with removable elements (6) in different positions of the primary circuit (4).

In addition, the support, in a central portion (9) the pumping element (5) is connected to an anchoring plate (7) moveable through a pumping slot (10) arranged in the support (4), thus enabling each pumping element (5) to be placed as required in a desired position of the primary circuit (4) along said pumping slot (10).

Likewise, as shown in Figures 1-3, the support (2) comprises one or more side panels (12) wherein one or more auxiliary elements (13) are connected to the primary circuit (4) via fluidic, pneumatic and/or electrical means.

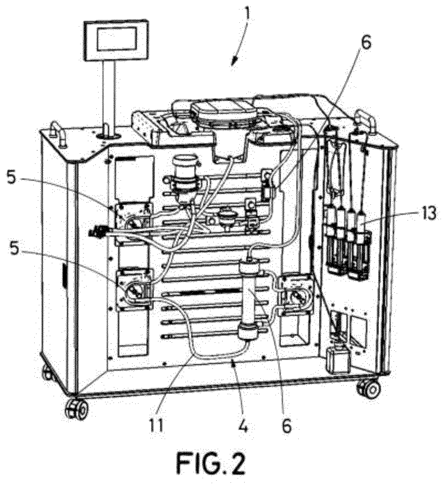

More particularly, Figure 2 shows a front perspective view of a preferred embodiment wherein the primary circuit (4), the pumping elements (5) and the secondary elements (13) have a configuration suitable for normothermic perfusion of a kidney with perfusate dialysis.

More particularly, the embodiment of Figure 2 shows that a peristaltic pump of the primary perfusate circuit (4) and a peristaltic pump of the perfusate bypass circuit for dialysis are mounted in the left vertical slot.

In the right slot, a peristaltic pump for the secondary circuit (13) of dialysis fluid is mounted.

Removable elements (6) such as flow, pressure, oxygen saturation, haematocrit, haemoglobin and temperature sensors are mounted in the horizontal slots.

Other removable elements (6) of the primary circuit (4) mounted through anchoring plates (7) are: modular tubes, oxygenator, arterial filter and sampling ports.

On the left side panel (12) there is:
- Gas mixing system, located in the cabinet of the panel, except for a port located directly on the panel for supplying mixed gas to the oxygenator of the primary perfusate circuit and the rotameter.
- Water heating system, located in the cabinet of the panel, except for two ports located directly on the panel for supplying hot water to the oxygenator of the primary perfusate circuit.

On the other side panel (12), in this case the right panel, there is:
- Syringe pump for supplying nutrients;
- Syringe pump for drug delivery;
- Perfusate replenishment device, consisting of a reservoir (bag) and a peristaltic pump.

The closed chamber (3) for housing the kidney is fastened to the support by means of an upper tray.

Finally, a lower tray comprises the urine reservoir.

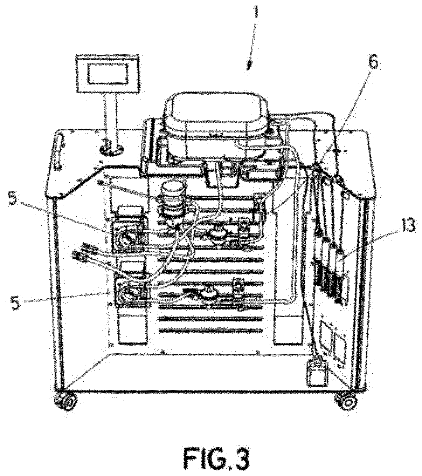

Moreover, Figure 3 shows an embodiment wherein the primary circuit (4), the pumping elements (5) and the secondary elements (17) have a configuration suitable for normothermic perfusion of a liver.

More particularly, in said embodiment two peristaltic pumps of the primary perfusate circuit (4) are mounted on the left vertical slot.

The removable elements (6) mounted on the horizontal slots by means of anchoring plates (7), are:
- flow, pressure, oxygen saturation, haematocrit, haemoglobin and temperature sensors;
- an oxygenator and two arterial filters;
- A dialyser.

On one of the side panels (12), particularly the left panel, auxiliary elements (13) are mounted such as:
- a gas mixing system, located in the cabinet of the panel, except for a port located directly on the panel for supplying mixed gas to the oxygenator of the primary perfusate circuit; and
- a water heating system, located in the cabinet of the panel, except for two ports located directly on the panel for supplying hot water to the oxygenator of the primary perfusate circuit.

On the right side panel (12) auxiliary elements (13) are mounted such as:
- one or more syringe pumps for supplying nutrients; and
- one or more syringe pumps for drug delivery;
- one or several replenishment pumps.

Finally, in the upper tray is the chamber (3) that houses the liver and in the lower tray is the reservoir of secreted bile.

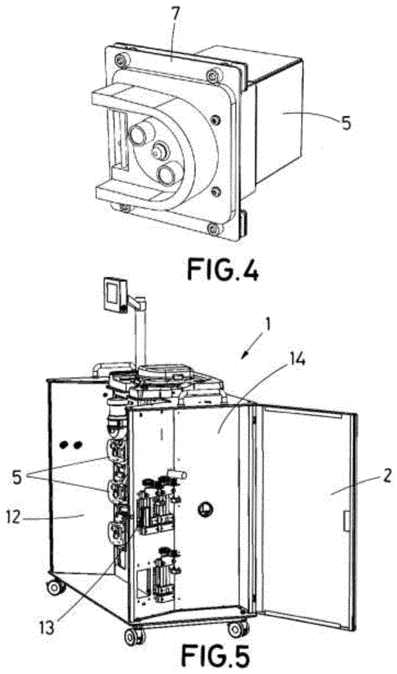

Figure 4 shows a pumping element (5), in this case a peristaltic pump, mounted on an anchoring plate (7) configured for sliding and being fixed in the vertical slots of the support (2).

It can be seen that in this case the fixing element (9) of the anchoring plate (7) to the support (2) is a screw.

Similarly, by means of an anchoring plate (7) elements such as arterial filters, flow sensors, oxygenators or any of the previously described removable elements (6) would be mounted.

Referring now to Figure 5, it can be seen that, in a preferred embodiment of the perfusion device (1), a rear cabinet (14) is mounted behind the side panels (12) wherein secondary elements (13) are fixed, in this case syringe pump actuation means.

## Claims

1. A modular and versatile perfusion device (1) for preserving an organ under adjustable operating conditions, comprising:
- a support (2) comprising an upper tray that houses a chamber (3) that in turn houses the organ, said chamber (3) in turn comprises at least one hydraulic inlet and outlet that connect in fluid communication with a primary circuit (4) through which, in use, a perfusate fluid circulates, wherein said primary circuit (4) is connectable to the vascular network of the organ, thus forming a closed circuit such that the perfusate fluid passes through the organ and is recirculated by means of at least one pumping element (5),
wherein the device is **characterised in that** it further comprises a plurality of removable elements (6) connected to the primary circuit (4) arranged in a central portion (9) of the support (2), wherein each removable element (6) is connected to the central portion (9) by means of an anchoring plate (7) moveable along a connection guide (8) of the support (2) and fixed thereto by means of at least one fixing element, thus enabling each removable element (6) to be placed as required in a desired position along the connection guide (8), thus modifying the primary circuit (4) depending on the organ to be preserved.

2. The device of claim 1, wherein the connection guide (8) of the central portion (9) of the support (2) is a slot that penetrates through a rail of the anchoring plate (7).

3. The device of claim 2, wherein the fixing element is a screw that passes through the slots and fixes the anchoring plate (7) to the support (2) in the desired position of the slot.

4. The device of claim 2, comprising a plurality of connection guides (8), each in the form of slots, for coupling a plurality of anchoring plates (7) with removable elements (6) in different positions of the primary circuit (4).

5. The device of claim 1, wherein each pumping element (5) is connected to an anchoring plate moveable through a pumping slot (10) arranged in the support (2), thus enabling each pumping element (5) to be placed as required in a desired position of the primary circuit (4) along said pumping slot (10).

6. The device of claim 5, wherein the one or more connection guides (8) are horizontally arranged and the one or more pumping slots (10) are vertically arranged in the central portion (9) of the support (2).

7. The device of claim 1, wherein the removable elements (6) comprise at least one sensor of:
- flow;
- pressure;
- oxygen saturation;
- haematocrit;
- haemoglobin;
- temperature.

8. The device of claim 1, wherein the primary circuit (4) comprises a plurality of modular tubes (11) connected to each other through which the perfusate fluid circulates, thus enabling the hydraulic configuration of the primary circuit (4) to be changed by means of hydraulic forks or bends arranged between each modular tube (11).

9. The device of claim 1, wherein the support (2) comprises one or more side panels (12) operatively attached to one or more auxiliary elements (13) that are connected to the primary circuit (4) via fluidic, pneumatic and/or electrical means.

10. The device of claim 9, wherein the one or more auxiliary elements (13) are selected from a list comprising:
- gas mixers for supplying gases to an oxygenator connected to the primary circuit;
- a heated or cooled water circuit to regulate the temperature of the perfusate fluid by means of a heat exchanger;
- syringe pumps for supplying auxiliary fluids to the primary circuit;
- an electrical stimulation system for applying electrical stimuli to the organ,
- a mechanical ventilation system for forced ventilation of the organ;
- a dialysis system for removing waste products from the primary circuit;
- a cell culture system for maintaining or culturing cells or cell by-products, which are subsequently supplied to the organ or to the perfusate fluid;
- a culture medium replenishment system for supplying additional fluids to the primary circuit in order to keep the volume of perfusate constant.

## Patentansprüche

1. Modulare und vielseitige Perfusionsvorrichtung (1) zum Konservieren eines Organs unter einstellbaren Betriebsbedingungen, umfassend:
- eine Halterung (2), die einen oberen Einsatz umfasst, der eine Kammer (3) beherbergt, die wiederum das Organ beherbergt, wobei die Kammer (3) wiederum mindestens einen hydraulischen Einlass und Auslass umfasst, die in Fluidkommunikation mit einem Primärkreislauf (4) verbunden sind, durch den bei Verwendung ein Perfusatfluid zirkuliert, wobei der Primärkreislauf (4) mit dem Gefäßnetz des Organs verbindbar ist und somit einen geschlossenen Kreislauf bildet, sodass das Perfusatfluid durch das Organ läuft und mittels mindestens eines Pumpelements (5) rezirkuliert wird,
wobei die Vorrichtung **dadurch gekennzeichnet ist, dass** sie ferner eine Vielzahl von abnehmbaren Elementen (6) umfasst, die mit dem Primärkreislauf (4) verbunden sind, der in einem mittleren Abschnitt (9) der Halterung (2) angeordnet ist, wobei jedes abnehmbare Element (6) mit dem mittleren Abschnitt (9) mittels einer Verankerungsplatte (7) verbunden ist, die entlang einer Verbindungsführung (8) der Halterung (2) bewegbar ist und daran mittels mindestens eines Befestigungselements befestigt ist, wodurch jedes abnehmbare Element (6) je nach Bedarf an einer gewünschten Position entlang der Verbindungsführung (8) platziert werden kann, um so den Primärkreislauf (4) je nach dem zu konservierenden Organ zu modifizieren.

2. Vorrichtung nach Anspruch 1, wobei die Verbindungsführung (8) des mittleren Abschnitts (9) der Halterung (2) ein Schlitz ist, der durch eine Schiene der Verankerungsplatte (7) verläuft.

3. Vorrichtung nach Anspruch 2, wobei das Befestigungselement eine Schraube ist, die durch die Schlitze läuft und die Verankerungsplatte (7) in der gewünschten Position des Schlitzes an der Halterung (2) befestigt.

4. Vorrichtung nach Anspruch 2, die eine Vielzahl von Verbindungsführungen (8), jeweils in Form von Schlitzen, zum Koppeln einer Vielzahl von Verankerungsplatten (7) an abnehmbare Elemente (6) an verschiedenen Positionen des Primärkreislaufs (4) umfasst.

5. Vorrichtung nach Anspruch 1, wobei jedes Pumpelement (5) mit einer Verankerungsplatte verbunden ist, die durch einen in der Halterung (2) angeordneten Pumpschlitz (10) bewegbar ist, sodass jedes Pumpelement (5) je nach Bedarf an einer gewünschten Position des Primärkreislaufs (4) entlang des Pumpschlitzes (10) platziert werden kann.

6. Vorrichtung nach Anspruch 5, wobei die eine oder die mehreren Verbindungsführungen (8) horizontal und die eine oder die mehreren Pumpschlitze (10) vertikal im mittleren Abschnitt (9) der Halterung (2) angeordnet sind.

7. Vorrichtung nach Anspruch 1, wobei die abnehmbaren Elemente (6) mindestens einen Sensor für Folgendes umfassen:
- Fluss;
- Druck;
- Sauerstoffsättigung;
- Hämatokrit;
- Hämoglobin;
- Temperatur.

8. Vorrichtung nach Anspruch 1, wobei der Primärkreislauf (4) eine Vielzahl von modularen Schläuchen (11) umfasst, die miteinander verbunden sind und durch die das Perfusatfluid zirkuliert, sodass die hydraulische Konfiguration des Primärkreislaufs (4) mittels Hydraulikgabeln oder -bögen, die zwischen jedem modularen Schlauch (11) angeordnet sind, geändert werden kann.

9. Vorrichtung nach Anspruch 1, wobei die Halterung (2) eine oder mehrere Seitenplatten (12) umfasst, die funktionsfähig an einem oder mehreren Hilfselementen (13) angebracht sind, die über fluidische, pneumatische und/oder elektrische Mittel mit dem Primärkreislauf (4) verbunden sind.

10. Vorrichtung nach Anspruch 9, wobei das eine oder die mehreren Hilfselemente (13) aus einer Liste ausgewählt sind, die Folgendes umfasst:
- Gasmischer zum Zuleiten von Gasen zu einem mit dem Primärkreislauf verbundenen Oxygenator;
- einen beheizten oder gekühlten Wasserkreislauf zum Regulieren der Temperatur des Perfusatfluids mittels eines Wärmetauschers;
- Spritzenpumpen zum Zuleiten von Hilfsfluiden zum Primärkreislauf;
- ein elektrisches Stimulationssystem zum Abgeben von elektrischen Reizen an das Organ;
- ein mechanisches Belüftungssystem zum Zwangsbelüften des Organs;
- ein Dialysesystem zum Entfernen von Abfallprodukten aus dem Primärkreislauf;
- ein Zellkultursystem zum Erhalten oder Kultivieren von Zellen oder Zellnebenprodukten, die anschließend dem Organ oder dem Perfusatfluid zugeleitet werden;
- ein Kulturmedium-Nachfüllsystem zum Zuleiten zusätzlicher Fluide zum Primärkreislauf, um das Perfusatvolumen konstant zu halten.

## Revendications

1. Dispositif de perfusion modulaire et polyvalent (1) permettant de conserver un organe dans des conditions fonctionnelles réglables, comprenant :
- un support (2) comprenant un plateau supérieur abritant une chambre (3) abritant à son tour l'organe, ladite chambre (3) comprend à son tour au moins une entrée et une sortie hydrauliques qui se lient en communication fluidique avec un circuit primaire (4) à travers lequel, en cours d'utilisation, un fluide de perfusat circule, dans lequel ledit circuit primaire (4) peut être relié au réseau vasculaire de l'organe, formant ainsi un circuit fermé de telle sorte que le fluide de perfusat passe à travers l'organe et est recirculé au moyen d'au moins un élément de pompage (5),
dans lequel le dispositif est **caractérisé en ce qu'**il comprend en outre une pluralité d'éléments amovibles (6) reliés au circuit primaire (4) agencé dans une partie centrale (9) du support (2), dans lequel chaque élément amovible (6) est relié à la partie centrale (9) au moyen d'une plaque d'ancrage (7) mobile le long d'un guide de liaison (8) du support (2) et fixé à celle-ci au moyen d'au moins un élément de fixation, permettant ainsi de placer chaque élément amovible (6) selon le besoin dans une position souhaitée le long du guide de liaison (8), modifiant ainsi le circuit primaire (4) en fonction de l'organe à préserver.

2. Dispositif selon la revendication 1, dans lequel le guide de liaison (8) de la partie centrale (9) du support (2) est une fente qui pénètre à travers un rail de la plaque d'ancrage (7).

3. Dispositif selon la revendication 2, dans lequel l'élément de fixation est une vis qui passe à travers les fentes et fixe la plaque d'ancrage (7) au support (2) dans la position souhaitée de la fente.

4. Dispositif selon la revendication 2, comprenant une pluralité de guides de liaison (8), chacun sous la forme de fentes, pour coupler une pluralité de plaques d'ancrage (7) avec des éléments amovibles (6) dans différentes positions du circuit primaire (4).

5. Dispositif selon la revendication 1, dans lequel chaque élément de pompage (5) est relié à une plaque d'ancrage mobile à travers une fente de pompage (10) agencée dans le support (2), permettant ainsi de placer chaque élément de pompage (5) selon le besoin dans une position souhaitée du circuit primaire (4) le long de ladite fente de pompage (10).

6. Dispositif selon la revendication 5, dans lequel le ou les guides de liaison (8) sont agencés horizontalement et le ou les fentes de pompage (10) sont agencées verticalement dans la partie centrale (9) du support (2).

7. Dispositif selon la revendication 1, dans lequel les éléments amovibles (6) comprennent au moins un capteur de :
- écoulement ;
- pression ;
- saturation en oxygène ;
- hématocrite ;
- hémoglobine ;
- température.

8. Dispositif selon la revendication 1, dans lequel le circuit primaire (4) comprend une pluralité de tubes modulaires (11) reliés les uns aux autres à travers lesquels le fluide de perfusat circule, permettant ainsi de modifier la configuration hydraulique du circuit primaire (4) au moyen de fourches ou coudes hydrauliques agencés entre chaque tube modulaire (11).

9. Dispositif selon la revendication 1, dans lequel le support (2) comprend un ou plusieurs panneaux latéraux (12) fixés de manière fonctionnelle à un ou plusieurs éléments auxiliaires (13) qui sont reliés au circuit primaire (4) par l'intermédiaire d'un moyen fluidique, pneumatique et/ou électrique.

10. Dispositif selon la revendication 9, dans lequel le ou les éléments auxiliaires (13) sont choisis dans une liste comprenant :
- des mélangeurs de gaz permettant d'alimenter des gaz à un oxygénateur relié au circuit primaire ;
- un circuit d'eau chauffée ou refroidie pour réguler la température du fluide de perfusion au moyen d'un échangeur de chaleur ;
- des pompes à seringues permettant d'alimenter des fluides auxiliaires au circuit primaire ;
- un système de stimulation électrique permettant d'appliquer des stimuli électriques à l'organe,
- un système de ventilation mécanique pour une ventilation forcée de l'organe ;
- un système de dialyse permettant d'éliminer les déchets du circuit primaire ;
- un système de culture cellulaire permettant de maintenir ou cultiver des cellules ou des sous-produits cellulaires, qui sont ensuite alimentés à l'organe ou au fluide de perfusion ;
- un système de réapprovisionnement du milieu de culture permettant d'alimenter des fluides supplémentaires au circuit primaire afin de maintenir le volume de perfusat constant.
